**Europäisches Patentamt**

(19) **European Patent Office**

**Office européen des brevets**

(11) Publication number: **0 041 195**

**A1**

(12) # EUROPEAN PATENT APPLICATION

(21) Application number: **81103934.6**

(22) Date of filing: **22.05.81**

(51) Int. Cl.³: **H 04 Q 7/04**
**H 04 M 1/27**

(30) Priority: **30.05.80 US 154882**

(43) Date of publication of application:
**09.12.81 Bulletin 81/49**

(84) Designated Contracting States:
**DE FR GB**

(71) Applicant: **GENERAL ELECTRIC COMPANY**
**1 River Road**
**Schenectady New York 12305(US)**

(72) Inventor: **Mann, Friedrich Harald**
**211 Nottingham Circle**
**Lynchburg Virginia(US)**

(74) Representative: **Schüler, Horst, Dr. et al,**
**Kaiserstrasse 41**
**D-6000 Frankfurt/Main 1(DE)**

(54) **Improved paging arrangement.**

(57) A paging terminal is provided with voice recognition equipment, voice answering equipment, and voice generating equipment which permit the terminal to receive spoken digits and words, and page a selected paging receiver to cause the receiver to visually display a caller's telephone number. The equipment permits the caller to vocally speak the paging receiver number and his telephone number, to have these spoken numbers verified, and thereby eliminate the need for the caller to dial a large number of digits. This makes paging more rapid and accurate.

FIG.1

EP 0 041 195 A1

10075-45-MR-233

IMPROVED PAGING ARRANGEMENT

This invention relates to a paging arrangement, and particularly to a paging arrangement that responds to voice commands from a person or caller to cause a paging receiver to provide a visual display.

In present radio paging systems, a visual display for the paging receiver is desirable to inform the person being paged of the telephone number of the person or caller making the page. Such a visual display enables the paged person to call the caller directly, thus saving time; or enables the paged person to decide whether to call the caller at once or at a later and more convenient time. In these present radio paging systems, the visual display requires that the caller dial extra digits, a function that requires a relatively long time or that exceeds the dialing capabilities of most telephone systems.

This invention provides paging arrangement that responds to spoken digits for causing a paging receiver to provide a visual display of those digits.

-2-

In one form the
paging arrangement responds to spoken digits
to page the desired paging receiver, and that further
responds to spoken digits to cause the paging receiver to
visually display the number of the caller or person making
the page.

According to another feature of the invention, there is provided a new
and
improved paging arrangement that requires the caller to dial
only the number of the paging terminal, and that thereafter
permits the caller to vocally provide the paging number of
the person being paged and the telephone number of the
caller making the page.

Briefly, these and other features are achieved in accordance with the invention by a paging arrangement or terminal
having telephone equipment for handling calls, and radio
transmitting equipment for transmitting pages to paging
receivers. Voice recognition equipment is coupled to the
telephone equipment for converting spoken digits or words
into respective standard electrical signals. Voice answering and generating equipment is also coupled to the telephone equipment for converting standard electrical signals
into respective spoken digits or words. Control equipment
is provided for causing the voice answering and generating
equipment to acknowledge a telephone call, and to repeat
back the digits vocally to a caller until the caller acknowledges or verifies that his spoken digits are correctly
repeated back by the voice generating equipment. Thereafter, the verified electrical signals corresponding to the
number of the paging receiver and the caller's number are

-3-

transmitted to the paging receiver which is activated to indicate, preferably visually, the number of the caller. The receiver user can then act on the information as desired.

The invention, together with further features and advantages, may be better understood from the following description given in connection with the accompanying drawings, in which:

FIGURE 1 shows a block diagram of a preferred paging arrangement in accordance with the invention; and

FIGURE 2 shows a logic flow diagram illustrating the operational sequence of the arrangement of FIGURE 1.

FIGURE I shows a paging terminal or arrangement in accordance with the invention. As known in the art, such a terminal includes one or more four-wire to two-wire hybrids 10 each having its two-wire side connected to a respective telephone line or trunk. The telephone line is usually part of a public telephone system, but it may also be a private system. The four-wire output side of the hybrid 10 is connected to the input of voice recognition equipment VRE. The four-wire input side of the hybrid 10 is connected to the output of voice answering equipment VAE and to the output of voice generating equipment VGE. These three equipments VRE, VAE, and VGE are known in the art. The voice recognition equipment VRE is designed to respond to the relatively complex electrical signals (produced by a

-4-

transducer such as the telephone mouthpiece) representing spoken words or digits, and to convert these complex signals into standard signals, each of which is different and represents a particular word or digit. For example, in a binary device, these conversions could be as follows:

| Digit or Word | Standard Signal |
| --- | --- |
| Zero | 0000 |
| One | 0001 |
| Two | 0010 |
| Three | 0011 |
| Four | 0100 |
| Five | 0101 |
| Six | 0110 |
| Seven | 0111 |
| Eight | 1000 |
| Nine | 1001 |
| Yes | 1010 |
| No | 1011 |

The voice answering equipment VAE typically includes a number of selected recorded voice messages which, when played, produce the complex electrical signals representing those recorded message. The voice generating equipment VGE is designed to respond to standard signals (such as those in the table above) and produce the complex electrical signals representing corresponding digits or words. These complex electrical signals, when applied to an appropriate transducer such as a telephone earpiece, cause sound waves representing the spoken word or digit to be produced. The voice recognition equipment VRE and the voice generating equipment VGE are known in the art. One example of such art

-5-

is shown in U.S. Patent 3,470,321 issued to W.C. Dersch on September 30, 1969. Likewise, the voice answering equipment VAE is known in the art, and is frequently used in telephone answering services already in existence. Hence, no further explanation is believed necessary for these equipments.

The terminal includes control equipment 14 indicated by the dashed line rectangle. This equipment 14 includes a computer 12 having inputs connected to the voice recognition equipment VRE output and to the hybrid 10 output. Outputs from the computer 12 are connected to the control inputs of the three equipments VRE, VAE, and VGE, and also to a storage unit 16. The computer 12 may be a known device arranged and programmed to respond to certain standard signals from the hybrid 12 and the voice recognition equipment VRE, and cause appropriate operation or functioning of the voice answering equipment VAE, and also the voice generating equipment VGE. In particular, the computer 12 responds to ringing signals and to standard signals representing the spoken words "yes" or "no", and causes the voice answering equipment VAE to provide predetermined spoken messages. Likewise, the computer 12 responds to standard signals representing digits, and causes the voice generating equipment VGE to provide predetermined spoken digits. The computer 12 also stores and erases the standard electrical signals from the voice recognition equipment VRE in the storage 16. The output of the storage unit 16 is applied to a radio transmitter 18 which, on activation, transmits the stored electrical signals to paging receivers (which are preferably of the display type). As is typical in a paging system, these standard signals preferably activate only one

-6-

pager. In accordance with the invention, these signals are utilized by the display pager to provide a visual display of the number of the person making the paging call. This number display is very useful to a person carrying the pager, since that person will then know who called him, and can decide whether to call back quickly or at some later and more convenient time.

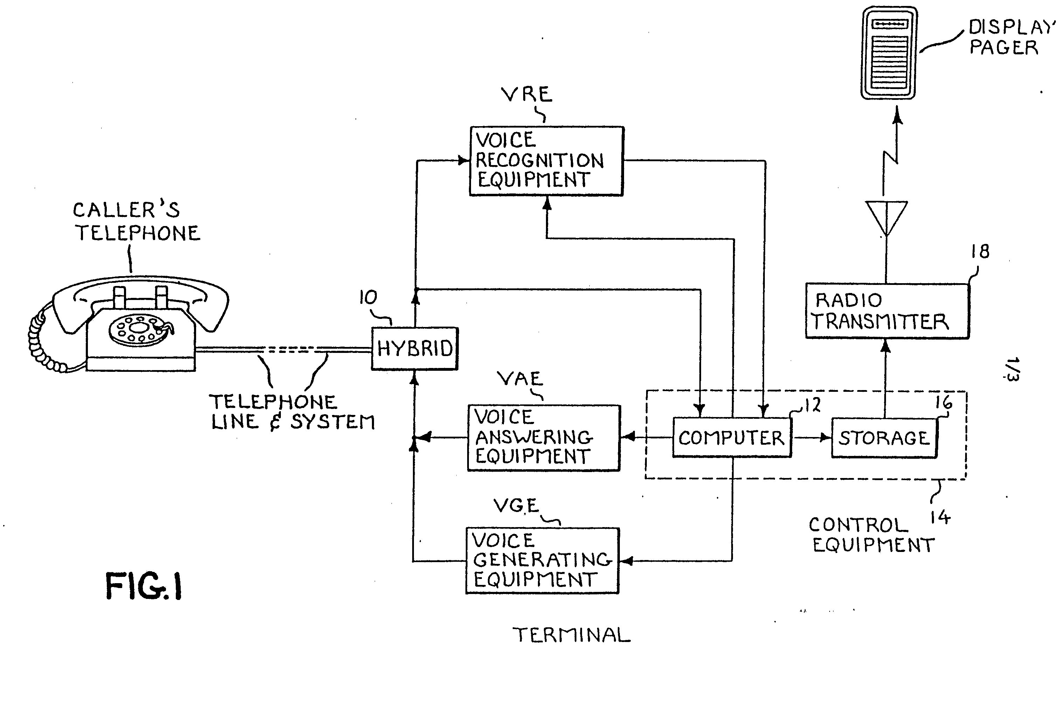

As will be appreciated by persons skilled in the art, my control equipment 14, including the computer 12 and storage 16, may serve a number of terminals. This is because voice recognizing, voice answering, and voice generating require a relatively long period of time, whereas the speed and capability of the computer 12 and the storage unit 16 are sufficiently great to operate with and serve a plurality of voice recognition, answering, and generating equipments. I have shown only one set of such equipments to keep the diagram of FIGURE 1 relatively simple.

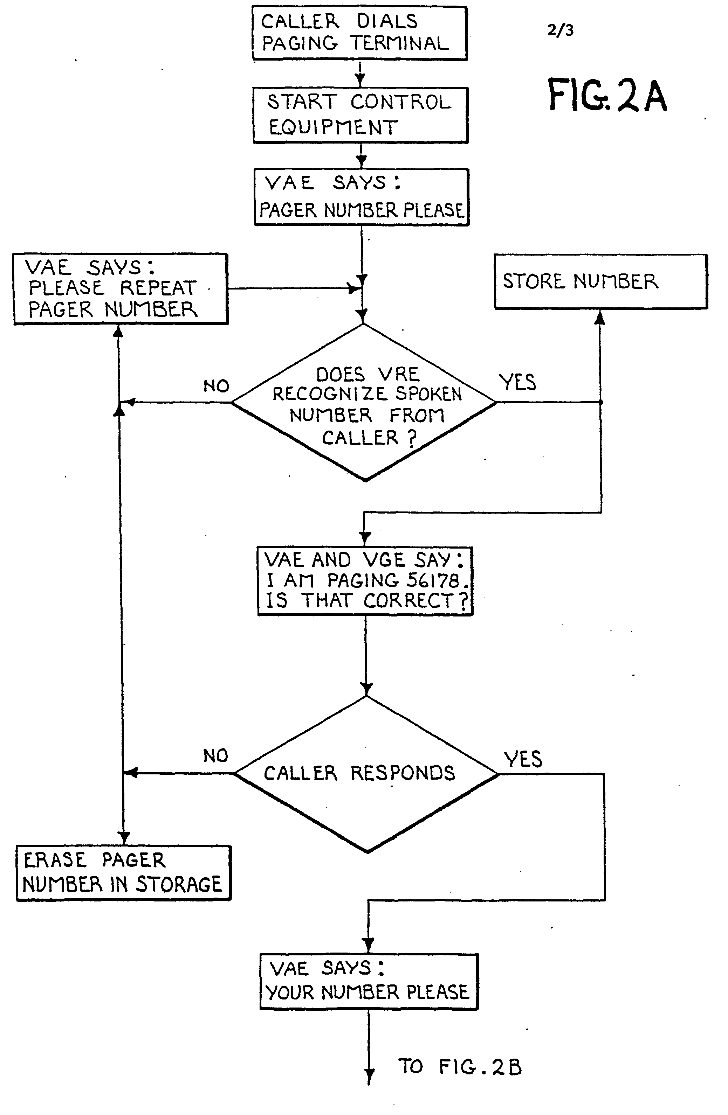

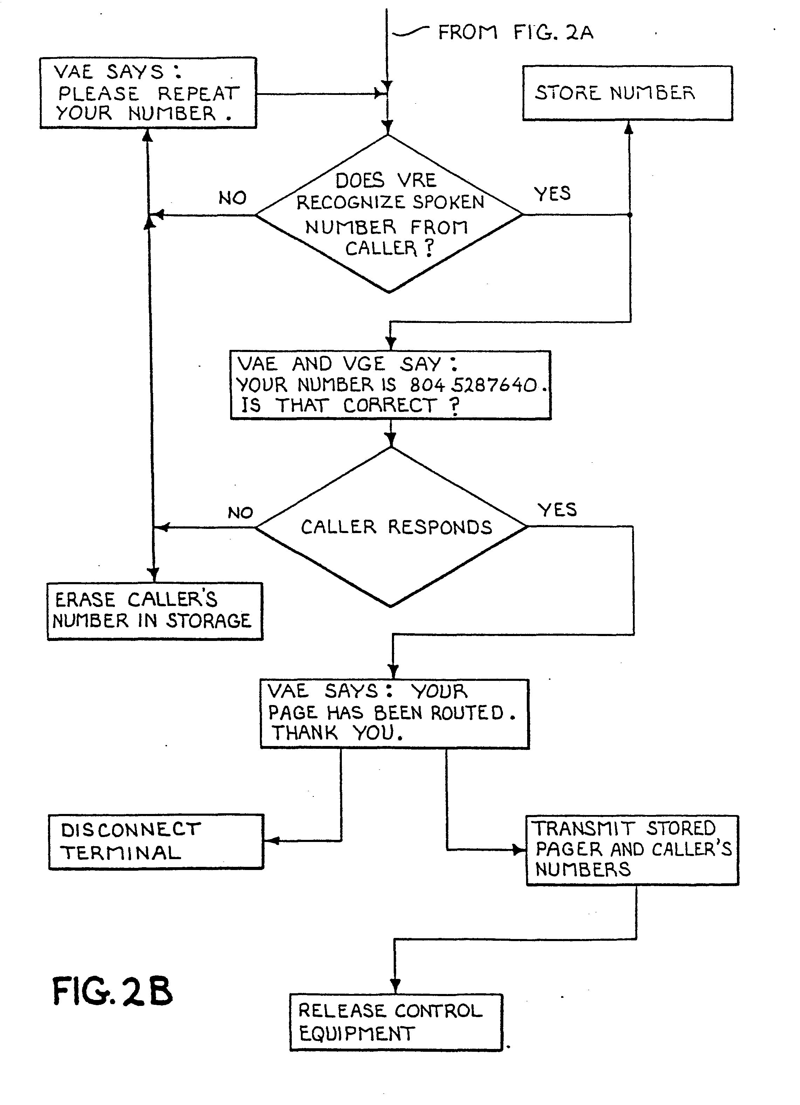

The operation of the terminal of FIGURE 1 is explained in connection with FIGURES 2A and 2B which are to be considered as joined together at the bottom of FIGURE 2A and the top of FIGURE 2B. In this explanation, it is assumed that a caller in one location or area code wishes to page a party in another location or area code. It is also assumed that the paging system in use has a total of five numbers or digits. Thus, in existing telephone systems and paging systems, this would require a caller to first dial ten numbers to reach the paging terminal in the desired area code, then dial five numbers for the particular pager receiver to be reached, and then dial 10 more numbers giving the caller's area code and telephone number. This is a

-7-

total of 25 numbers or digits, and it is readily apparent that it would be easy to make a mistake in dialing so many digits. This large number of digits also exceeds the dialing capability of most telephone systems. In accordance with the invention, the dialing of the pager number, and the caller's area code and telephone number, are eliminated, thus leaving only 10 numbers to be dialed to reach the terminal. And the caller will be assured that he has dialed those 10 numbers correctly, since he should reach the desired and selected paging termina.

As indicated at the top of FIGURE 2A, the caller first dials the 10 digits of the desired paging terminal. The hybrid 10 of FIGURE 1 supplies the ringing signal to the computer 12 to start the control equipment 14. Upon start, the computer 12 provides a signal to the voice answering equipment VAE to cause that equipment to answer and transmit, as electrical signals, the message: "Pager number please". The caller then responds by saying the desired pager number, for example five, six, one, seven, eight. As this number is spoken, the voice recognition equipment VRE produces appropriate standard electrical signals indicative of those five digits 56178. In the binary code example given, this would be the binary pulses 0101 for five, 0110 for six, 0001 for one, 0111 for seven and 1000 for eight. If the voice recognition equipment VRE fails to recognize the spoken digits, the computer 12 causes the voice answering equipment VAE to say: "Please repeat the pager number." This may be repeated several times, and if no recognition is achieved, the terminal may be disconnected from the line. If the voice recognition equipment VRE does recognize the

-8-

spoken digits, the computer 12 stores the pulses in the storage unit 16. After the pulses for these five numbers are stored, the computer 12 causes the voice answering equipment VAE to say; "I am paging", then causes the voice generating equipment VGE to say: "five, six, one, seven, eight", and then causes the voice answering equipment VAE to say: "Is that correct?" If the caller responds "no", the voice recognition equipment produces the pulses 1011 which cause the computer 12 to erase the number in the storage unit 16, and also causes the voice answering equipment VAE to say: "Please repeat pager number." If the pager number is not recognized after a selected number of times, the terminal may be disconnected from the line.

If after the equipment says: "I am paging five, six, one, seven, eight. Is that correct?" the caller verifies by responding "yes", the voice recognition equipment VRE produces the pulses 1010. This causes the computer 12 to activate the voice answering equipment VAE to say: "Your number please." The caller responds with his number: "eight, zero, four, five, two, eight, seven, six, four, zero", for example. If the voice recognition equipment VRE does not recognize the spoken number, the voice answering equipment VAE says: "Please repeat your number." As before, this can be repeated several times, and then the terminal disconnected. If the voice recognition equipment VRE recognizes the spoken number, the standard pulses are stored. After storage, the computer 12 causes the voice answering equipment VAE and the voice generating equipment VGE to say: "Your number is eight, zero, four, five, two, eight, seven, six, four, zero. Is that correct?" If the caller responds "no", the voice recognition equipment VRE would supply the pulses 1011 which cause the computer 12 to erase the caller's number in the storage unit 15, and to activate the voice answering equipment VAE to say again "Please repeat your number." This can be repeated several times before disconnecting the terminal.

If the caller verifies by responding "yes" to the question, the voice recognition equipment VRE supplies the pulses 1010 to the computer 12. The computer 12 then causes the voice answering equipment VAE to say: "Your page has been routed. Thank you." The computer 12 also supplies appropriate signals to provide a disconnect signal to the telephone line, and also causes the storage 16 to apply the stored pager number and caller's number to the radio transmitter 18 for transmission. The pager number is encoded in an appropriate way to alert the particular pager having the number 56178, and the caller's number 8045287640 is sub-sequently transmitted in an appropriate way for display by the pager so alerted. And finally, the computer 12 then releases the control equipment 14 for receiving or handling another page.

It will thus be seen that a new and improved paging arrangement has been described which enables a page to be verified and transmitted relatively simply, and also permits the page to include the caller's number for identification and use by the person being paged. While only one embodiment of the invention has been shown, persons skilled in the art will appreciate the many modifications that may be made. For example, the voice recognition equipment VRE, the voice answering equipment VAE, and the voice generating equipment

-10-

VGE may take many forms, and may operate with many different types of signals, either binary or analog. The voice recognition equipment VRE and the voice generating equipment VGE may recognize and generate more than just digits, yes, and no. The voice answering equipment VAE may have added messages. The computer 12 and storage 16 may have a large capacity and ability so that they can handle a plurality of paging calls at one time. And the display pager may take many forms, providing either the preferred visual display or if desired, an audible indication or reproduction of the caller's number. However, such audible reproduction is relatively complex, and is not likely to be included in a paging receiver. Therefore, while the invention has been described with reference to a particular embodiment, it is to be understood that modifications may be made without departing from the spirit and scope of the invention .

CLAIMS:                        10075-45-MR-233

1.   An improved arrangement for use at a paging terminal having telephone equipment and a radio transmitter comprising:

voice recognition equipment connected to said telephone equipment for producing standard signals in response to selected spoken words received by said telephone equipment;

voice generating equipment connected to said telephone equipment for producing selected spoken words in response to standard signals applied to said voice generating equipment;

control means connected between said voice recognition equipment and said voice generating equipment for storing said standard signals, and for applying said standard signals to said voice generating equipment;

and means connecting said control means to said radio transmitter for applying a sequence of said stored signals to said radio transmitter to activate number indicative apparatus in a radio receiver.

2.   The improved arrangement of claim 1 wherein said number indicative apparatus is visual.

3.   The improved arrangement of claim 1 or claim 2 and further comprising voice answering equipment connected between said control means and said telephone equipment for producing selected spoken messages in response to standard signals applied to said voice answering equipment.

4. The improved arrangement of Claim 1 wherein voice answering equipment is combined with said voice generating equipment for producing spoken words and messages in response to predetermined electrical signals applied to said voice generating and answering equipment.

5. The improved arrangement of claim 4 wherein said number indicative apparatus is visual.

6. The improved arrangement of claim 4 or claim 5 wherein said voice recognition equipment is capable of recognizing at least the spoken digits zero through nine and the spoken words yes and no, and produces a respective predetermined electrical signal in response thereto.

7. An automatic radio paging system for use with a telephone that can be called by a first person desiring to page a second person having a paging receiver, said system wherein:

    the voice recognition means is coupled to said telephone for recognizing at least spoken digits and producing a respective predetermined signal in response to each spoken digit,
    the control means is coupled to said voice recognition means for storing each signal produced by said voice recognition means and not subsequently changed,
    the voice generating means is coupled to said voice recognition means and to said telepnone for producing a respective predetermined spoken digit in response to each stored signal,
    and the radio transmitter coupled to said control means for transmitting said stored signals.

8. The automatic radio paging system of claim 7, and further comprising at least one paging receiver responsive to said transmitter for visually indicating the digits represented by said transmitted signals.

9. Improved radio paging apparatus according to claim 1 for use with a telephone capable of being called by at least one person, wherein:

the voice recognition means has an input coupled to said telephone, said voice recognition means being capable of producing a respective predetermined standard signal at an output in response to each signal representing spoken digits zero through nine received at said input,

the voice generating means has an output coupled to said telephone, said voice generating means being capable of producing a respective predetermined signal representing spoken digits at said output in response to each standard signal applied to an input,

the control means is selectively coupled to said voice recognition means and to said voice generating means for applying said predetermined standard signals produced by said voice recognition means to said voice generating means to provide signals representing spoken digits to said telephone and to said person in response to signals representing spoken digits previously applied to said voice recognition means,

and the radio transmitter is coupled to said control means for transmitting said predetermined standard signals produced by said voice recognition means.

10.    The improved radio paging apparatus of claim 9  and further comprising a paging receiver for producing an intelligible output in response to transmitted standard signals.

11.    Improved radio paging apparatus according to claim 4 for use with a telephone capable of being called by at least one person, wherein:

the voice recognition means has an      imput coupled to said telephone, said voice recognition means being capable of producing a respective predetermined standard signal at an output in response to each spoken digit and word received at said input,

the voice generating and answering means has an output coupled to said telephone, said voice generating and answering means being capable of producing at least a respective predetermined spoken word at said output in response to each standard signal applied to an input;

the control means is selectively  coupled to said voice recognition means and to said voice generating and answering means for applying said predetermined standard signals produced by said voice recognition means to said voice generating and answering means to provide spoken words to said telephone for verification by said person in response to previously spoken words applied to said voice recognition means, said control means including means for storing verified standard signals;

and the radio   transmitter coupled to said control means for transmitting verified signals produced by said voice recognition means and stored by said control means.

12.    The improved radio paging apparatus of claim 11 and further comprising a radio receiver for producing an intelligible output representative of said transmitted electrical signals.

FIG.1

DISPLAY PAGER

VRE VOICE RECOGNITION EQUIPMENT

CALLER'S TELEPHONE

RADIO TRANSMITTER  18

10 HYBRID

TELEPHONE LINE & SYSTEM

VAE VOICE ANSWERING EQUIPMENT

COMPUTER  12    STORAGE  16

VGE VOICE GENERATING EQUIPMENT

CONTROL EQUIPMENT  14

TERMINAL

1/3

0041195

FIG.2A

```
          ┌─────────────────┐
          │  CALLER DIALS   │
          │ PAGING TERMINAL │
          └─────────────────┘
                   │
                   ▼
          ┌─────────────────┐
          │  START CONTROL  │
          │    EQUIPMENT    │
          └─────────────────┘
                   │
                   ▼
          ┌──────────────────────┐
          │  VAE SAYS:           │
          │ PAGER NUMBER PLEASE  │
          └──────────────────────┘
                   │
                   ▼
```

┌──────────────────┐                              ┌──────────────────┐
│ VAE SAYS:        │                              │  STORE NUMBER    │
│ PLEASE REPEAT    │──────►                       └──────────────────┘
│ PAGER NUMBER     │                                       ▲
└──────────────────┘                                       │

```
                     DOES VRE
       NO          RECOGNIZE SPOKEN          YES
   ◄────────────   NUMBER FROM   ────────────────►
                     CALLER ?
```

┌────────────────────────┐
│ VAE AND VGE SAY:       │
│ I AM PAGING 56178.     │
│ IS THAT CORRECT ?      │
└────────────────────────┘
            │
            ▼

```
       NO                              YES
   ◄──────────    CALLER RESPONDS    ──────────►
```

┌────────────────────┐
│ ERASE PAGER        │
│ NUMBER IN STORAGE  │
└────────────────────┘

┌─────────────────────┐
│ VAE SAYS:           │
│ YOUR NUMBER PLEASE  │
└─────────────────────┘
            │
            ▼
        TO FIG.2B

0041195

FROM FIG. 2A

VAE SAYS :
PLEASE REPEAT
YOUR NUMBER.

STORE NUMBER

DOES VRE
RECOGNIZE SPOKEN
NUMBER FROM
CALLER ?

NO          YES

VAE AND VGE SAY :
YOUR NUMBER IS 804 5287640.
IS THAT CORRECT ?

CALLER RESPONDS

NO          YES

ERASE CALLER'S
NUMBER IN STORAGE

VAE SAYS : YOUR
PAGE HAS BEEN ROUTED.
THANK YOU.

DISCONNECT
TERMINAL

TRANSMIT STORED
PAGER AND CALLER'S
NUMBERS

FIG. 2B

RELEASE CONTROL
EQUIPMENT

0041195

European Patent Office

**EUROPEAN SEARCH REPORT**

Application number

EP 81 10 3934

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | ELECTRICAL DESIGN NEWS, vol. 16, no. 22, November 15, 1971 DENVER (US) "Shades of 2001....", page CH4 <br><br> * the whole article * | 1,3,6, 7,9,11 | H 04 Q 7/04 <br> H 04 M 1/27 |
| | GB - A - 492 514 (STANDARD TELEPHONES AND CABLES) <br><br> * page 1, line 84 to page 3, line 65; figure * | 1,7,9, 11 | |
| | EP - A - 0 002 435 (LOEWE OPTA) <br><br> * claims 1 to 4; figures 1 and 2 * | 1,7,9, 11 | TECHNICAL FIELDS SEARCHED (Int. Cl.³) <br><br> H 04 Q 7/00 <br> 7/02 <br> 7/04 <br> H 04 M 1/26 <br> 1/27 <br> 1/57 <br> G 06 F 3/16 |
| E/P | EP - A - 0 027 596 (TELEFON- BAU UND NORMALZEIT) <br><br> * page 5, line 15 to page 7, line 5; claims 1 to 3, 8 and 9; figure 1/1 * | 1,6,7, 9,11 | |
| E | EP - A - 0 031 144 (MATSUSHITA ELECTRIC INDUSTRIAL CO) <br><br> * page 4, line 4 to page 10, line 8; figures 3 and 6 * <br><br> ./.. | 1,6,7, 9,11 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 04.09.1981 | WANZEELE |

EPO Form 1503.1 06.78

# EUROPEAN SEARCH REPORT

**European Patent Office**

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | TECHNISCHE MITTEILUNGEN AEG - TELEFUNKEN, vol. 68, nos. 6/7, 1978 BERLIN (DE) H. KOCH: "Personensuch-Funkanlage D 600D für Städte", pages 287 to 290.<br><br>* page 287, left-hand column, line 22 to right-hand column, line 13; figure 1 *<br><br>-- | 1,2,5, 8,10, 12 | |
| P | ELECTRICAL DESIGN NEWS, vol. 25, no. 19, October 20, 1980 BOSTON (US) E. TEJA: "Repertory telephone dialer responds to human voice", pages 57 and 59.<br><br>* the whole article *<br><br>----- | 1,7,9, 11 | **TECHNICAL FIELDS SEARCHED (Int. Cl³)** |